# EUROPEAN PATENT SPECIFICATION

(11) **EP 1 492 663 B1**
(45) Date of publication and mention of the grant of the patent: **04.10.2006**
(21) Application number: 03712133.2
(22) Date of filing: 04.04.2003
(51) Int. Cl.: B32B 3/04

(54) **HOLLOW SANDWICH PANEL**
HOHLES SANDWICHPANEEL
PANNEAU SANDWICH CREUX

(30) Priority: 11.04.2002 IT PD20020090
(43) Date of publication of application: 05.01.2005
(73) Proprietor: Quadrifoglio di Paola Cozza & C. S.A.S., 35010 Peraga di Vigonza PD (IT)
(72) Inventor: PINESCHI, Sandro, I-35121 Padova (IT)
(74) Representative: Modiano, Micaela Nadia
(86) International application number: PCT/EP2003/003558
(87) International publication number: WO 2003/084740

(56) References cited:
- DE-A- 2 005 558
- FR-A- 2 690 870
- US-A- 3 654 053
- US-A- 5 006 391

## Description

### Technical Field

The present invention relates to a hollow sandwich panel, particularly but not exclusively for doors, wardrobes and movable walls.

### Background Art

Hollow sandwich panels are currently known for various applications, such as panels for doors, wardrobes, dividing walls, panels for minor building work and interior building, prefabricated panels for mobile homes, et cetera.

Hollow sandwich panels are normally constituted by a body that is composed of a frame made of a material such as wood, MDF, wood slats, plywood, et cetera, inside which filling material, such as corrugated cardboard, honeycomb cardboard, expanded plastic material, wood strips et cetera, is inserted.

Said body is covered on its main surface with a thin layer of wood-based material, typically having a thickness that varies between 3 and 6 mm.

The cladding operation is performed by means of an adhesive and a plate press.

A decorative lamina is applied over said layer, which is much thinner than said layer and is made of a material such as wood veneer, impregnated paper or plastic laminations.

These hollow sandwich panels, although having been commercially available for several years and being now manufactured with quality materials, are not free from drawbacks.

The hollow sandwich panel, in fact, usually requires an excellent finish not only on the main surface but also on the edges, where rounded portions or ledges are often provided.

In order to form the rabbets, after applying the cladding to the frame the edges of the panel are routed and additional finishing decorative claddings are applied to the edges.

This can entail that any errors in the machining of the edges compromise the entire structure, with evident waste.

Furthermore, the routing is often rough, irregular and uneven, and this makes it necessary to apply beforehand a finishing element to the edge of the frame before proceeding with the application of the decorative claddings.

US-A-3654053 discloses a decorative panel having a combination of features as set forth in the precharacterizing portion of the appended claim 1.

### Disclosure of the Invention

The aim of the present invention is to provide a hollow sandwich panel that has a quality finish.

Within this aim, an object of the present invention is to provide a hollow sandwich panel that eliminates subsequent finishing treatments after the application of the decorative claddings.

Another object of the present invention is to provide a hollow sandwich panel whose costs are in any case competitive with respect to those of panels having a similar functionality.

Another object of the present invention is to provide a hollow sandwich panel that can be manufactured with known systems and technologies.

In accordance with the invention, there is provided a hollow sandwich panel as defined in the appended claims.

### Brief description of the Drawings

Further characteristics and advantages of the invention will become better apparent from the following detailed description of a preferred but not exclusive embodiment thereof, illustrated by way of non-limitative example in the accompanying drawings, wherein:
Figure 1 is a transverse sectional view of a detail of the hollow sandwich panel according to the invention, in a first embodiment;
Figure 2 is a transverse sectional view of a first component of the hollow sandwich panel of Figure 1 before assembly onto the hollow sandwich panel;
Figure 3 is a transverse sectional view of a second component of the hollow sandwich panel of Figure 1 before assembly onto the hollow sandwich panel;
Figure 4 is a transverse sectional view of a second alternative embodiment of the second component of Figure 3;
Figure 5 is a transverse sectional view of the component of Figure 4 after assembly onto the hollow sandwich panel;
Figure 6 is a transverse sectional view of a detail of the hollow sandwich panel according to the invention in a third embodiment;
Figure 7 is a transverse sectional view of a first component of the hollow sandwich panel of Figure 6 before assembly onto the hollow sandwich panel;
Figure 8 is a transverse sectional view of a second component of the hollow sandwich panel of Figure 6 before assembly onto the hollow sandwich panel;
Figure 9 is a transverse sectional view of a detail of the hollow sandwich panel according to the invention in a fourth embodiment;
Figure 10 is a transverse sectional view of a first component of the hollow sandwich panel of Figure 9 before assembly onto the hollow sandwich panel;
Figure 11 is a transverse sectional view of a detail of the hollow sandwich panel according to the invention, in a fifth embodiment;
Figure 12 is a transverse sectional view of a detail of the hollow sandwich panel according to the invention, in a sixth embodiment;
Figure 13 is a transverse sectional view of a first component of the hollow sandwich panel of Figure 12, before assembly onto said hollow sandwich panel;
Figure 14 is a transverse sectional view of the component of Figure 13 after assembly onto the hollow sandwich panel;
Figure 15 is an enlarged-scale view of a detail of Figure 7;
Figure 16 is an enlarged-scale view of a detail of the component of Figure 15 after assembly onto the hollow sandwich panel;
Figure 17 is an enlarged-scale view of a detail of the component of Figure 15 after assembly onto the hollow sandwich panel, coupled to the second component of Figure 8, shown in a transverse sectional view.

### Ways of carrying out the Invention

With reference to the figures, a hollow sandwich panel according to the invention is generally designated by the reference numeral 10.

Said hollow sandwich panel comprises a body 11, which is constituted by a frame 11a, for example the outline of a door, inside which filling material 12, for example honeycomb cardboard, is arranged.

The body 11 is clad externally, on its faces and lateral edges, with sheets 13 that are composed of a structural layer 14 made of wooden material, and an external lamina 15, made for example of plastics, which has a predominantly aesthetic function.

The external lamina 15 covers both the flat surfaces and the curved surfaces, such as for example the molding 15a.

The sheets 13 are fixed to the body 11 by means of adhesives and/or by means of a plate or roller press (calender).

The lamina 15 is fixed to the first layer 14 by means of adhesives and/or by way of pressing on a plate or roller press (calender).

Moreover, the sheets 13 are provided with contoured incisions or notches 16, at which folds are produced in order to make the sheets 13 follow the discontinuities of the body 11 and/or any other discontinuities, such as for example folds for forming ledges, as described better hereinafter.

In these embodiments, the cladding of the body 11 is constituted by a first sheet 13a, which forms a half box-like element for containing the body 11 that affects or extends over one face of the body 11 and folds on the lateral edges 11b of the body 11, and by a second sheet 13b, which rests on the opposite face of the body 11 so as to close said half box-like containment body.

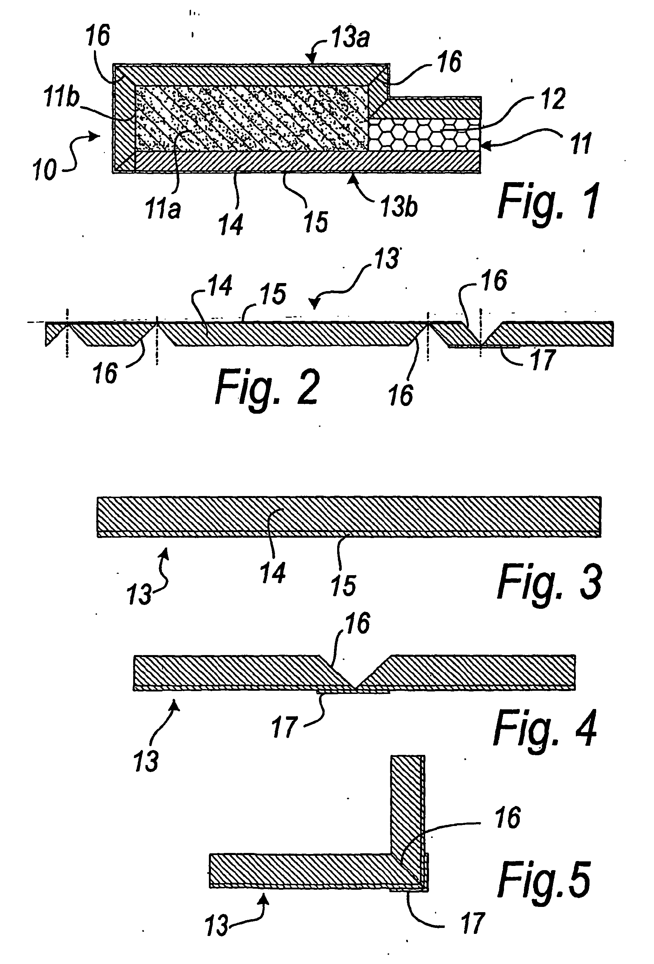

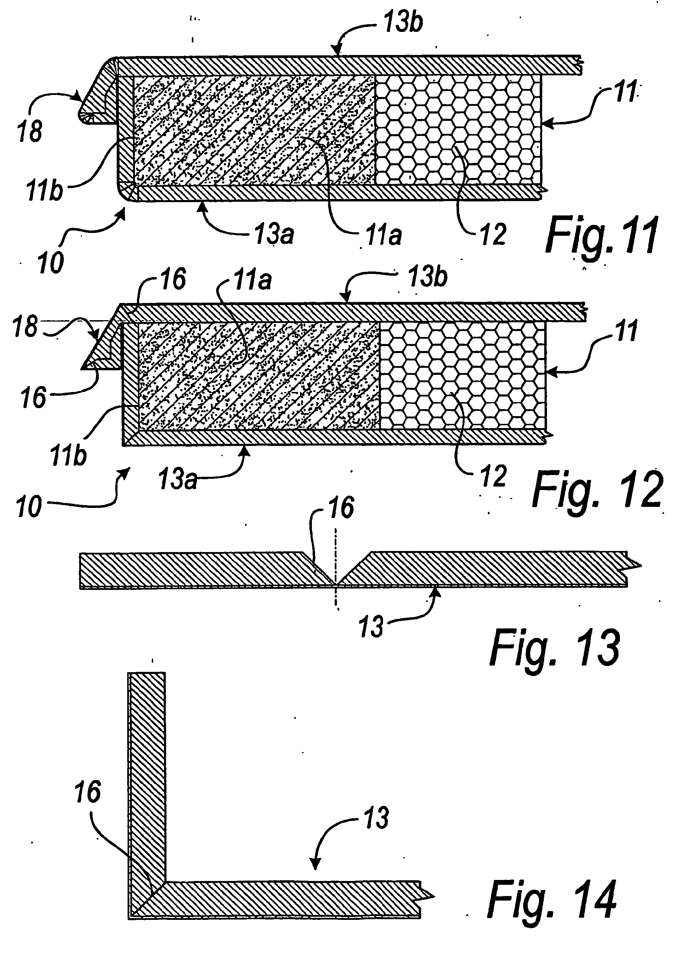

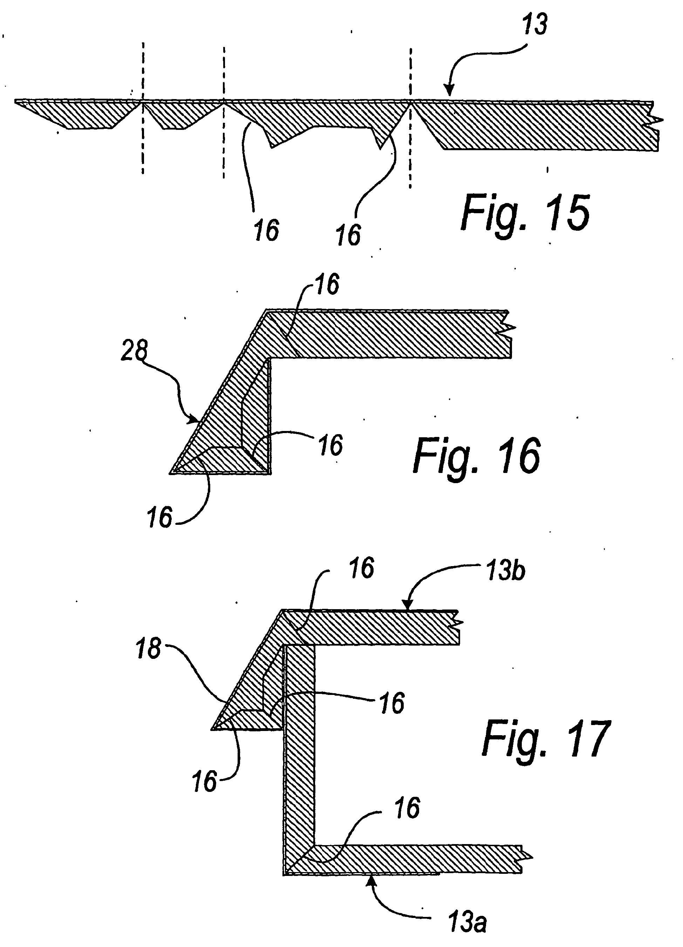

Considering the embodiments of Figures 1, 2, 3, 4, 5, 6, 7, 8, 12, 13, 14, 15, 16 and 17, said incisions 16 are formed in the sheets 13 before, fixing the sheets to the body 11, when the sheets are still flat, and the incisions 16 are substantially V-shaped.

The space formed with these V-shaped incisions 16 allows to fold the sheets 13.

The incisions 16, when associated with folds that have a convex shape, such as for example the corners of the lateral edges 11b of the body 11 or the corners of the moldings of the body 11, are formed on the side of the layer 14 through its entire depth without affecting the lamina 15.

Since the lamina 15 is made of plastics, it acts as a hinge to allow the folding of the sheet 13.

When the incisions or notches 16 are associated with concave folds, they are formed on the side of the lamina, affecting the entire depth of the respective sheets up to an auxiliary element 17, for example a film made of plastically deformable plastic material, as shown in Figures 2, 7 and 8.

Said auxiliary element acts as a hinge in order to allow the folding of the sheets 13.

When the incisions 16 are located at convex folds and the material of the lamina is too rigid to withstand folding, it is again possible to use the auxiliary element 17, arranged on the side of the lamina, as shown in Figures 4 and 5.

In this case, the incisions 16 affect the entire thickness of the sheets without affecting the auxiliary element 17, which acts as a hinge.

In this case, after fitting the sheets 13 to the body 11, the auxiliary element 17 is removed.

With reference to the embodiments of Figures 1 to 3, on the first sheet 13a, at the end of the portion that is folded along the edge 11b of the sheet 13a, there is a V-shaped incision to allow the folding of the sheet 13a so as to form a body that protrudes on the opposite face to be used as an abutment for the second sheet 13b.

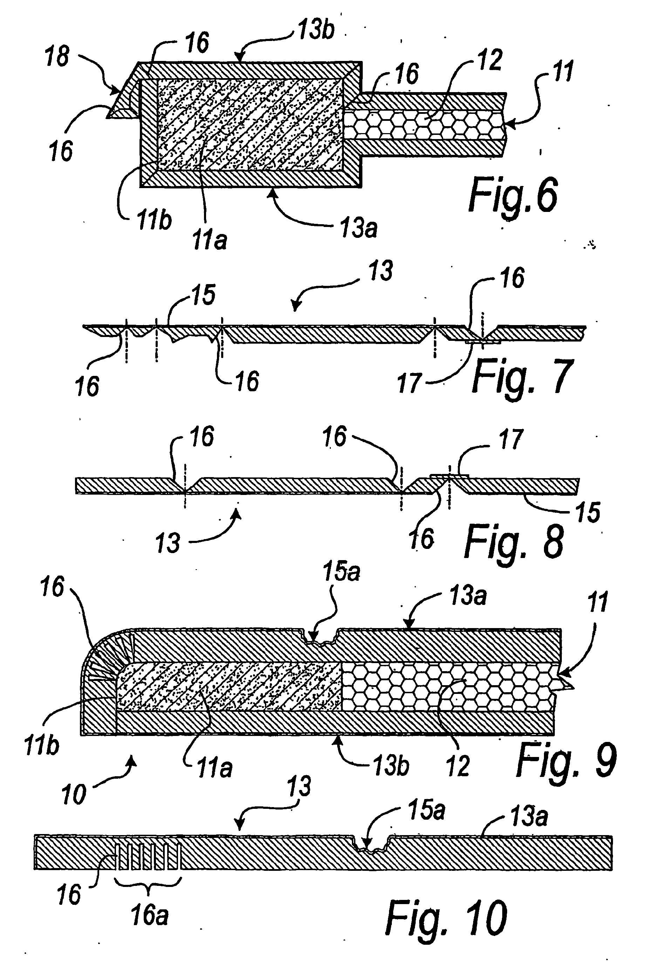

With reference to the embodiments of Figures 9, 10 and 11, as an alternative to the V-shaped incisions, in the case of convex folds that are radiused along a circular arc it is possible to use on the sheets 13, at said convex folds, a plurality 16a of U-shaped incisions 16 that are parallel and mutually close and lie at right angles to the lamina 15.

The incisions of such plurality 16a partially affect the thickness of the supporting layer 14 or, as an alternative, said incisions affect said thickness completely.

The plurality 16a of incisions 16 allows local deformations in series, such that the folding of the sheet is shaped like a circular arc instead of like a sharp corner.

With reference to the embodiments of Figures 6, 11, 12, 15, 16 and 17, the second sheet 13b lies on the outside of the frame 11, at an edge 11a of the body 11, folding back by means of the incisions 16 and resting on the portion of the first sheet 13a that covers the edge 11b, thus forming an abutment body 18 of the structure 10, for example the ledge of a door, which mates with a complementary abutment element, for example the jamb of a door.

The abutment body 18 is also fixed to the portion of the first sheet 13a that covers the edge 11b by means of adhesives.

In practice it has been found that the invention thus described solves the problems noted in the known types described above; in particular, the present invention provides a hollow sandwich panel that has a quality finish.

Further, the present invention provides a hollow sandwich panel that eliminates subsequent finishing treatments after the application of the decorative claddings.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2002A000090 from which this application claims priority are incorporated herein by reference.

## Claims

1. A hollow sandwich panel of the type comprising a body (11) constituted by a frame (11a) that contains filler material (12) and is clad externally with sheets (13, 13a, 13b), each sheet being composed of a structural layer (14) and of an external lamina (15) that has a predominantly aesthetic function, said sheets (13, 13a, 13b) comprise contoured incisions (16) at which folds are formed in order to make said sheets (13, 13a, 13b) follow the discontinuities of said body and/or other discontinuities, said incisions (16) associated with convex folds being formed on the side of said layer (14) through its entire depth, said hollow sandwich panel being **characterized in that**:
it comprises contoured incisions (16) for forming concave folds, said incisions (16) being formed on the side of said lamina (15), extending the entire depth of said respective sheets (13) up to an auxiliary element (17) that is fixed to said structural layer (14) at the respective said incisions (16), said auxiliary element (17) acting as a hinge to allow the folding of said sheets (13); and/or
said incisions (16) associated with said convex folds are formed on the side of said layer (14) through its entire depth and through the entire thickness of said lamina (15) up to an auxiliary element (17) that is fixed to said lamina (15) at the respective said incisions (16), said auxiliary element (17) acting as a hinge to allow the folding of said sheets (13) and being removable after the step for fitting said sheets (13) to said body (11).

2. The hollow sandwich panel according to claim 1, **characterized in that** it comprises, if said convex folds are radiused in a circular arc, a plurality (16a) of said incisions (16) at each one of said convex folds, said incisions (16) being perpendicular to said lamina (15) and affecting fully or partially the thickness of said supporting layer (14), said plurality (16a) of incisions (16) allowing said sheets (13) to bend and follow said discontinuities.

3. The hollow sandwich panel according to one or more of the preceding claims, **characterized in that** said body (11) is clad with two of said sheets (13), a first sheet (13a) which forms a half box-like body for containing said body (11), is arranged on a face of said body (11) and folds onto the outer edges (11b) of said body (11), and a second sheet (13b) that rests on the opposite face of said body (11) so as to close said half box-like containment body.

4. The hollow sandwich panel according to one or more of the preceding claims, **characterized in that** one of said sheets (13) is folded back, at said incisions (16), externally to said body (11) so as to form an abutment element (18) for said hollow sandwich panel for coupling to a complementary abutment element.

5. The hollow sandwich panel according to one or more of the preceding claims, **characterized in that** said auxiliary element (17) is a film of plastically deformable plastic material that is fixed to said sheet by means of adhesives.

6. The hollow sandwich panel according to one or more of the preceding claims, **characterized in that** said structural layer (14) is made of wooden material.

7. The hollow sandwich panel according to one or more of the preceding claims, **characterized in that** said lamina (15) is made of plastics.

8. The hollow sandwich panel according to one or more of the preceding claims, **characterized in that** said lamina (15) is made of wooden material.

9. The hollow sandwich panel according to one or more of the preceding claims, **characterized in that** said sheet (13) is made of paper-like material.

10. The hollow sandwich panel according to one or more of the preceding claims, **characterized in that** said sheets (13) are fixed to said body (11) by means of adhesives and/or by means of a plate or roller press.

11. The hollow sandwich panel according to one or more of the preceding claims, **characterized in that** said lamina (15) is fixed to said structural layer (14) with adhesives and/or by way of pressing on a plate or roller press.

## Patentansprüche

1. Hohles Sandwichprofil der Art, die einen Körper (11) enthält, der aus einem Rahmen (11a) besteht, der ein Füllmaterial (12) enthält und außen mit Verbundschichten (13, 13a, 13b) umhüllt ist, von denen jede aus einer Trägerschicht (14) und einer äußeren Deckschicht (15) mit in erster Linie nur ästhetischer Funktion besteht, wobei die Verbundschichten (13, 13a,13b) konturierte Einschnitte (16) aufweisten, an denen Faltungen gebildet sind, damit die Verbundschichten (13, 13a,13b) den Unregelmäßigkeiten des Körpers und/oder anderen Unregelmäßigkeiten folgen können, wobei die Einschnitte (16) konvexen Faltungen zugeordnet sind, die auf der Seite der Trägerschicht (14) durch deren gesamte Tiefe gebildet sind, **dadurch gekennzeichnet,**
**dass** das hohle Sandwichprofil konturierte Einschnitte (16) zur Bildung von konkaven Faltungen enthält, wobei die Einschnitte (16) auf der Seite der Deckschicht (15) durch die gesamte Tiefe der entsprechenden Verbundschichten (13) bis zu einem Hilfselement (17) gebildet sind, das an der Trägerschicht (14) an dem entsprechenden Einschnitt (16) befestigt ist, wobei das Hilfselement (17) als Scharnier dient, um das Falten der Verbundschichten (13) zu ermöglichen, und/oder
**dass** die den konvexen Faltungen zugeordneten Einschnitte (16) auf der Seite der Trägerschicht (14) durch deren gesamte Tiefe und durch die gesamte Dicke der Deckschicht (15) bis zu dem Hilfselement (17) gebildet ist, das an der Deckschicht (15) an dem entsprechenden Einschnitt (16) befestigt ist, wobei das Hilfselement (17) als Scharnier dient, um das Falten der Verbundschichten (13) zu ermöglichen und nach dem Schritt des Befestigens der Verbundschichten (13) auf dem Körper (11) entfernbar ist.

2. Hohles Sandwichprofil nach Anspruch 1, **dadurch gekennzeichnet, dass** es für den Fall, dass die konvexen Faltungen in einem Radius von einem Kreisbogen gefaltet sind, eine Mehrzahl (16a) von Einschnitten (16) an jedem der konvexen Faltungen aufweist, dass die Einschnitte (16) rechtwinklig zu der Deckschicht (15) verlaufen und die Dicke der Trägerschicht (14) ganz oder teilweise beeinträchtigen und dass die Mehrzahl (16a) von Einschnitten (16) es zulässt, dass die Verbundschichten (13) gebogen werden und den Unregelmäßigkeiten folgen können.

3. Hohles Sandwichprofil nach einem oder mehreren der vorstehenden Ansprüche, **dadurch gekennzeichnet, dass** der Körper (11) mit zwei der Verbundschichten (13) umhüllt ist, von denen eine erste Verbundschicht (13a) eine kastenförmige Körperhälfte zur Aufnahme des Körpers (11) bildet, auf der einen Grundfläche des Körpers (11) angeordnet und um die Außenkanten (11b) des Körpers (11) herum gefaltet ist, und von denen eine zweite Verbundschicht (13b) auf der gegenüberliegenden Grundfläche des Körpers (11) angeordnet ist, um die kastenförmige Körperhälfte zu schließen.

4. Hohles Sandwichprofil nach einem oder mehreren der vorstehenden Ansprüche, **dadurch gekennzeichnet, dass** eine der Verbundschichten (13) an den außen am Körper (11) angeordneten Einschnitten (16) zurückgefaltet ist, um ein Anschlagelement (18) für das hohle Sandwichprofil zur Kopplung mit einem komplementären Anschlagelement zu bilden.

5. Hohles Sandwichprofil nach einem oder mehreren der vorstehenden Ansprüche, **dadurch gekennzeichnet, dass** das Hilfselement (17) ein Film aus plastisch verformbarem Kunststoffmaterial ist, das durch Klebstoff an der Verbundschicht befestigt ist.

6. Hohles Sandwichprofil nach einem oder mehreren der vorstehenden Ansprüche, **dadurch gekennzeichnet, dass** die Trägerschicht (14) aus Holzmaterial besteht.

7. Hohles Sandwichprofil nach einem oder mehreren der vorstehenden Ansprüche, **dadurch gekennzeichnet, dass** die Deckschicht (15) aus Kunststoff besteht.

8. Hohles Sandwichprofil nach einem oder mehreren der vorstehenden Ansprüche, **dadurch gekennzeichnet, dass** die Deckschicht (15) aus Holzmaterial besteht.

9. Hohles Sandwichprofil nach einem oder mehreren der vorstehenden Ansprüche, **dadurch gekennzeichnet, dass** die Schicht (13) aus papierartigem Material besteht.

10. Hohles Sandwichprofil nach einem oder mehreren der vorstehenden Ansprüche, **dadurch gekennzeichnet, dass** die Verbundschichten (13) an dem Körper (11) durch Klebstoff und/oder mittels einer Platten- oder Rollenpresse befestigt sind.

11. Hohles Sandwichprofil nach einem oder mehreren der vorstehenden Ansprüche, **dadurch gekennzeichnet, dass** die Deckschichten (15) an der Trägerschicht (14) durch Klebstoff und/oder Anpressen mit einer Platten- oder Rollenpresse befestigt sind.

## Revendications

1. Panneau sandwich creux du type comprenant un corps (11) constitué par un cadre (11a) contenant un matériau de remplissage (12) et dont la paroi externe est revêtue de feuilles (13, 13a, 13b), chaque feuille étant composée d'une couche structurelle (14) et d'une lame externe (15) qui a une fonction principalement esthétique, lesdites feuilles (13, 13a, 13b) comprennent des incisions profilées (16) au niveau desquelles sont formés des plis afin de faire en sorte que lesdites feuilles (13, 13a, 13b) suivent les discontinuités dudit corps et/ou d'autres discontinuités, lesdites incisions (16) associées à des plis convexes étant formées sur le côté de ladite couche (14) sur toute sa profondeur, ledit panneau sandwich creux étant
**caractérisé en ce que** :
il comprend des incisions profilées (16) pour former des plis concaves, lesdites incisions (16) étant formées sur le côté de ladite lame (15), s'étendant sur toute la profondeur desdites feuilles respectives (13) jusqu'à un élément auxiliaire (17) qui est fixé à ladite couche structurelle (14) au niveau desdites incisions respectives (16), ledit élément auxiliaire (17) servant de charnière afin de permettre le pliage desdites feuilles (13) ; et/ou
lesdites incisions (16) associées auxdits plis convexes sont formées sur le côté de ladite couche (14) sur toute sa profondeur et sur toute l'épaisseur de ladite lame (15) jusqu'à un élément auxiliaire (17) qui est fixé à ladite lame (15) au niveau desdites incisions respectives (16), ledit élément auxiliaire (17) servant de charnière pour permettre le pliage desdites feuilles (13) et étant détachable après l'étape de fixation desdites feuilles (13) audit corps (11).

2. Panneau sandwich creux selon la revendication 1, **caractérisé en ce qu'**il comprend, si lesdits plis convexes sont arrondis en un arc de cercle, une pluralité (16a) desdites incisions (16) au niveau de chacun desdits plis convexes, lesdites incisions (16) étant perpendiculaires à ladite lame (15) et affectant totalement ou en partie l'épaisseur de ladite couche de soutien (14), ladite pluralité (16a) d'incisions (16) permettant auxdites feuilles (13) de se courber et de suivre lesdites discontinuités.

3. Panneau sandwich creux selon l'une ou plusieurs des revendications précédentes, **caractérisé en ce que** ledit corps (11) est revêtu de deux desdites feuilles (13), une première feuille (13a), qui forme un corps semblable à un demi-coffre pour contenir ledit corps (11), est disposée sur une face dudit corps (11) et se rabat sur les bords extérieurs (11b) dudit corps (11), et une seconde feuille (13b), qui repose sur la face opposée dudit corps (11) afin de refermer le corps de confinement semblable à un demi-coffre.

4. Panneau sandwich creux selon l'une ou plusieurs des revendications précédentes, **caractérisé en ce qu'**une desdites feuilles (13) est rabattue, au niveau desdites incisions (16), de façon externe audit corps (11) de manière à former un élément de butée (18) pour ledit panneau sandwich creux en vue d'un couplage à un élément de butée complémentaire.

5. Panneau sandwich creux selon l'une ou plusieurs des revendications précédentes, **caractérisé en ce que** ledit élément auxiliaire (17) est un film en un matériau plastique déformable de manière plastique qui est fixé à ladite feuille au moyen d'adhésifs.

6. Panneau sandwich creux selon l'une ou plusieurs des revendications précédentes, **caractérisé en ce que** ladite couche structurelle (14) est réalisée en un matériau en bois.

7. Panneau sandwich creux selon l'une ou plusieurs des revendications précédentes, **caractérisé en ce que** ladite lame (15) est réalisée en matière plastique.

8. Panneau sandwich creux selon l'une ou plusieurs des revendications précédentes, **caractérisé en ce que** ladite lame (15) est réalisée en un matériau en bois.

9. Panneau .sandwich creux selon l'une ou plusieurs des revendications précédentes, **caractérisé en ce que** ladite feuille (13) est réalisée en un matériau papier.

10. Panneau sandwich creux selon l'une ou plusieurs des revendications précédentes, **caractérisé en ce que** lesdites feuilles (13) sont fixées audit corps (11) au moyen d'adhésifs et/ou au moyen d'une plaque ou d'une presse à rouleaux.

11. Panneau sandwich creux selon l'une ou plusieurs des revendications précédentes, **caractérisé en ce que** ladite lame (15) est fixée à ladite couche structurelle (14) avec des adhésifs et/ou par une pression sur une plaque ou presse à rouleaux.
